# EUROPÄISCHE PATENTANMELDUNG

(11) **EP 2 363 014 A1**
(43) Veröffentlichungstag der Anmeldung: **07.09.2011**
(21) Anmeldenummer: 11154978.8
(22) Anmeldetag: 18.02.2011
(51) Int. Cl.: A01B 73/00, A01D 75/00

(54) **Erntemaschine mit einem Erntevorsatz und einem Stützrad**

(30) Priorität: 02.03.2010 DE 102010002506
(71) Anmelder: Deere & Company, Moline, IL 61265-8098 (US)
(72) Erfinder: Vogelgesang, Claus-Joseph, 66399, Mandelbachtal (DE); Braun, Martin, 66909, Henschtal (DE)
(74) Vertreter: Holst, Sönke

(57) **Zusammenfassung**

Eine selbstfahrende Erntemaschine (10) umfasst ein durch vordere und hintere Räder (14, 16) und/oder Raupenlaufwerke auf dem Boden abgestütztes Fahrgestell (12), einen Einzugsförderer (30), an dem ein Erntevorsatz (20) angebracht ist, und wenigstens ein den vorderen Rädern (14) oder Raupenlaufwerken vorgelagertes, im Bodeneingriff bringbares Stützrad (54), dessen Stützlast durch einen Aktor (64, 86) verstellbar ist. Der Aktor (64, 86) ist bei einer Bremsung der Erntemaschine (10) im Sinne einer Vergrößerung der Stützkraft des Stützrades (54) ansteuerbar.

## Beschreibung

Die Erfindung betrifft eine selbstfahrende Erntemaschine mit einem durch vordere und hintere Räder und/oder Raupenlaufwerke auf dem Boden abgestützten Fahrgestell, einem Einzugsförderer, an dem ein Erntevorsatz angebracht ist, und wenigstens einem den vorderen Rädern oder Raupenlaufwerken vorgelagerten, im Bodeneingriff bringbares Stützrad, dessen Stützlast durch einen Aktor verstellbar ist.

### Stand der Technik

An selbstfahrenden Erntemaschinen finden Erntevorsätze zum Abernten und Einbringen von Erntegut Verwendung. Aufgrund von Leistungssteigerungen der Erntemaschinen in jüngerer Zeit werden immer breitere Erntevorsätze verwendet, die eine relativ große Masse aufweisen. Während Schneidwerke für Mähdrescher gewöhnlich in sich starr sind und zum Straßentransport vom Mähdrescher getrennt und auf einem Transportwagen abgelegt werden, werden Maispflücker für Mähdrescher und Maisgebisse für Feldhäcksler in der Regel klappbar ausgeführt. Es gibt jedoch auch klappbare Schneidwerke für Mähdrescher. Zum Straßentransport werden äußere Seitenteile der Erntevorsätze in eine Transportstellung verschwenkt, in der Regel nach oben oder innen. Sie bleiben beim Straßentransport an der Vorderseite der Erntemaschine befestigt. Dabei stellt sich die gesetzlich zulässige Gewichtsbelastung der Vorderräder der Erntemaschine bei den zunehmend breiter und schwerer werdenden Erntevorsätzen als problematisch dar.

In der DE 199 18 551 A1 wurde vorgeschlagen, ein zusätzliches Rad zur Abstützung des Erntevorsatzes bereitzustellen, das beim Straßentransport der Erntemaschine in Bodenkontakt gebracht werden kann. Dadurch erhält man eine zusätzliche Abstützung, die eine Einhaltung der gesetzlichen Vorschriften erleichtert oder ermöglicht. In einer Ausführungsform ist das zusätzliche Rad an einem separaten Hilfsfahrwerk angebracht, der unter den Erntevorsatz schiebbar und dort durch Bolzen befestigbar ist, die sich durch Löcher im Erntevorsatz und im Wagen erstrecken. Das zusätzliche Rad kann starr oder federnd am Wagen befestigt sein.

Eine weitere Ausführungsform eines Wagens zur Abstützung eines Erntevorsatzes bei einer Straßenfahrt wird in der DE 10 2005 001 412 A1 beschrieben. Dort ist das Rad durch einen Hydraulikzylinder gegenüber dem Hilfsfahrwerk abgestützt. Der Hydraulikzylinder weist eine mit einem Druckspeicher verbundene Kammer auf, die im Fahrbetrieb mit dem Druckspeicher ein geschlossenes System bildet.

Die EP 1 611 781 A1 beschreibt eine Erntemaschine, an deren Erntevorsatz ein Stützrad durch einen Hydraulikzylinder höhenverstellbar angebracht ist. Eine die Position des Erntevorsatzes gegenüber dem Erdboden durch Fühler sensierende Bodenkopiersteuerung steuert die Position des Erntevorsatzes gegenüber der Erntemaschine und zusätzlich den Hydraulikzylinder an.

In der EP 1 674 306 A2 wird eine andere Erntemaschine beschrieben, die mit vorderen und rückwärtigen Rädern und einer dazwischen angeordneten Stützradanordnung ausgestattet ist. Die Stützlast der Stützradanordnung wird durch eine Erfassung der Radgeschwindigkeiten der vorderen und rückwärtigen Räder und der Geschwindigkeit gegenüber dem Erdboden schlupfabhängig geregelt. Bei auftretendem Schlupf oder Überschreitung eines zulässigen Bremsschlupfs wird die Stützlast der Stützradanordnung abgesenkt, um den Bodeneingriff der anderen Räder zu verbessern.

### Aufgabe der Erfindung

Ein Problem der Erntemaschinen mit einem bei der Straßenfahrt durch ein Stützrad abgestützten Erntevorsatz liegt darin, dass aufgrund des Stützrades die Belastung der vorderen Räder gegenüber einer ohne zusätzliches Stützrad fahrenden Erntemaschine vermindert ist. Hinzu kommt beim Bremsen eine Schwerpunktsverlagerung nach vorn, die eine weitere Verminderung der Belastung der vorderen Räder bedingt. Die beiden Wirkungen können beim Abbremsen zu Schlupf gegenüber dem Untergrund führen, insbesondere bei ungünstigen Bedingungen, wie nasser Fahrbahn. Im Stand der Technik (DE 199 18 551 A1 und DE 10 2005 001 412 A1) wird die Stützkraft des Stützrads konstant gehalten. Während die EP 1 611 781 A1 sich lediglich auf eine Höhenregelung des Stützrads im Erntebetrieb bezieht, schlägt die EP 1 674 306 A2 eine Absenkung der Belastung des zwischen den Vorder- und Hinterrädern der Erntemaschine angebrachten Stützrads bei auftretendem Schlupf vor. Das Problem der schlupfenden vorderen Räder der Erntemaschine wird somit durch diesen Stand der Technik nicht gelöst.

Die der Erfindung zu Grunde liegende Aufgabe wird darin gesehen, das Bremsverhalten einer selbstfahrenden Erntemaschine mit einem bei der Straßenfahrt durch ein Stützrad abstützbaren Erntevorsatz zu verbessern.

### Lösung

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Eine selbstfahrende Erntemaschine, bei der es sich beispielsweise um einen Mähdrescher, einen Feldhäcksler oder einen Baumwollpflücker handeln kann, umfasst ein Fahrgestell, das durch vordere und hintere Räder auf dem Boden abgestützt wird. Anstelle der vorderen Räder oder der hinteren Räder oder beider können auch Raupenlaufwerke treten. Am Fahrgestell ist frontseitig ein Einzugsförderer vorgesehen, an dem ein Erntevorsatz in der Regel abnehmbar angebracht ist. In Vorwärtsrichtung vor den vorderen Rädern (bzw. Raupenlaufwerken) der Erntemaschine ist ein Stützrad angebracht, das sich in Bodeneingriff gebracht werden kann. Ein Aktor dient zur Verstellung der Stützlast des Stützrades. Der Aktor wird bremskraftabhängig kontrolliert und bei einer Bremsung der Erntemaschine im Sinne einer Vergrößerung der Stützkraft des Stützrades angesteuert.

Indem die Stützkraft des Stützrades vergrößert wird, wird der beim Bremsen der Erntemaschine zwangsläufig auftretenden Verlagerung des Schwerpunkts nach vorn entgegengewirkt. Ein Abheben der hinteren Räder oder Raupenlaufwerke wird verhindert und eine hinreichende Belastung der vorderen Räder oder Raupenlaufwerke sichergestellt, sodass ihre Bremskraft schlupffrei oder -arm auf den Erdboden übertragen werden kann.

Das Stützrad kann am Erntevorsatz und/oder am Einzugsförderer und/oder an der Erntemaschine selbst, beispielsweise an deren Vorderachse befestigt werden. Wird es am Erntevorsatz befestigt, ist es vorzugsweise an einem Hilfsfahrwerk angebracht, welches vor einer Straßenfahrt am Erntevorsatz befestigt und vor Beginn des Erntebetriebs wieder abgenommen wird. Es wäre aber auch denkbar, das Stützrad permanent am Erntevorsatz oder am Einzugsförderer und/oder an der Erntemaschine zu befestigen.

Das Stützrad kann mittels einer beweglichen (z. B. verschiebbaren oder verschwenkbaren) Halterung am Hilfsfahrwerk angebunden sein. Der Aktor ist dann vorzugsweise zwischen dem Hilfsfahrwerk und der Halterung angeordnet, um das Stützrad gegenüber dem Hilfsfahrwerk zu verstellen.

Bei dieser Ausführungsform bietet es sich an, die Bremshydraulik der Erntemaschine über ein Ventil mit dem Aktor zu koppeln. Das Ventil beaufschlagt den Aktor demnach mit einem vom aktuellen Bremsdruck in der Bremshydraulik der Erntemaschine (vorzugsweise proportional) abhängigen Druck, der wiederum die Stützkraft des Stützrads definiert. Im Fall, dass die Erntemaschine nicht gebremst wird, wird der Aktor hingegen mit einem vorbestimmten Druck beaufschlagt, der zu einer definierten Stützkraft des Stützrades führt, die kleiner als bei einer Bremsung der Erntemaschine ist.

Bei einer anderen Ausführungsform dient der Aktor zur Höhenverstellung des Einzugsförderers und somit des daran befestigten Erntevorsatzes gegenüber dem Fahrgestell der Erntemaschine. Die zur Höhensteuerung des Erntevorsatzes dienende Steueranordnung kontrolliert demnach den Aktor und wird mit einem Bremssignal beaufschlagt, das ein Absenken des Einzugsförderers gegenüber der Erntemaschine und somit eine Vergrößerung der Stützkraft zur Folge hat. Falls der Steueranordnung hingegen kein Bremssignal vorliegt, regelt sie hingegen die Position des Aktors derart, dass eine definierte Stützkraft des Stützrads vorliegt. Als Rückkopplungsgröße dient dabei der Druck im Aktor.

Dem Stützrad kann eine mit dem Bremssystem der Erntemaschine gekoppelte Bremse zugeordnet werden, um die Bremswirkung weiter zu verbessern.

Vorzugsweise wird die Stützkraft des Stützrades proportional zur Bremskraft vergrößert.

Das Stützrad kann permanent im Bodeneingriff sein, um die Belastung der vorderen Räder oder Raupenlaufwerke der Erntemaschine in allen Fahrzuständen zu vermindern. Es wäre jedoch auch denkbar, das Stützrad nur bei einer Bremsung der Erntemaschine in Bodeneingriff zu bringen.

### Ausführungsbeispiele

In den Zeichnungen ist ein nachfolgend näher beschriebenes Ausführungsbeispiel der Erfindung dargestellt. Es zeigt:
- Fig. 1: eine seitliche Ansicht einer ersten Ausführungsform einer Erntemaschine mit einem daran angebrachten, durch ein Stützrad abgestützten Erntevorsatz,
- Fig. 2: ein Schema der Bremshydraulik der Erntemaschine aus Figur 1,
- Fig. 3: eine seitliche Ansicht zweiten Ausführungsform einer Erntemaschine mit einem daran angebrachten, durch ein Stützrad abgestützten Erntevorsatz, und
- Fig. 4: ein Schema der Bremshydraulik und der Höhensteuerung des Erntevorsatzes der Erntemaschine aus Figur 3.

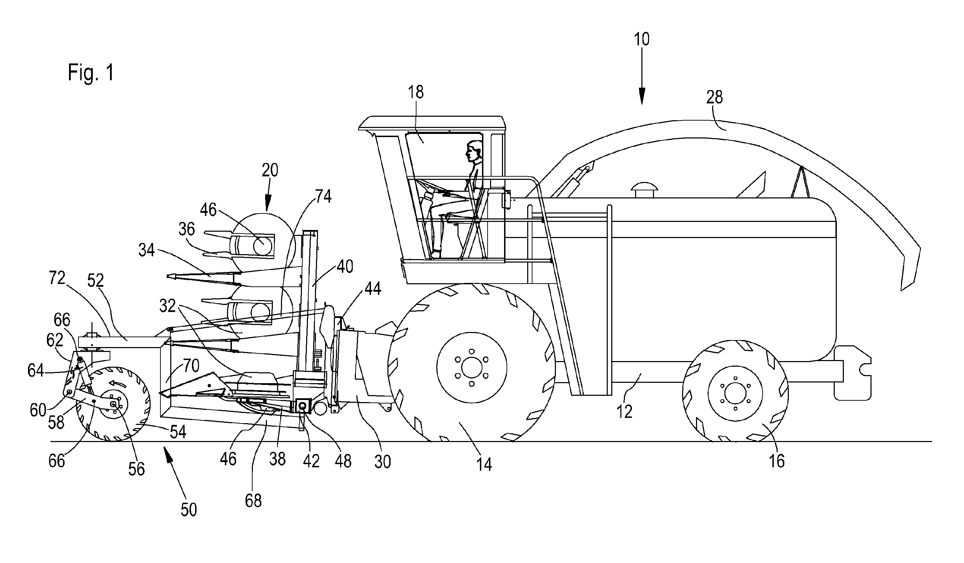

Eine in der Figur 1 gezeigte selbstfahrende landwirtschaftliche Erntemaschine 10 in der Art eines Feldhäckslers baut sich auf einem Fahrgestell 12 auf, das von vorderen und hinteren Rädern 14 und 16 getragen wird. Die vorderen Räder 14 dienen als Hauptantriebsräder, während die hinteren Räder 16 lenkbar sind. Die Bedienung der Erntemaschine 10 erfolgt von einer Fahrerkabine 18 aus, von der aus ein Erntevorsatz 20 einsehbar ist. Mittels eines Erntevorsatzes 20 vom Boden aufgenommenes Gut, z. B. Mais, Sonnenblumen oder Sorghum, wird im Erntebetrieb über einen Einzugsförderer 30 einer nicht eingezeichneten Häckseltrommel im Innern der Erntemaschine 10 zugeführt, die es in kleine Stücke häckselt und es einer (ebenfalls nicht eingezeichneten) Fördervorrichtung aufgibt. Das Gut verläßt die Erntemaschine 10 zu einem nebenher fahrenden Anhänger über einen um die Hochachse drehbaren und höhenverstellbaren Auswurfkrümmer 28 mit einer verstellbaren Auswurfklappe. Zwischen der Häckseltrommel und der Fördervorrichtung kann eine nicht eingezeichnete Nachzerkleinerungsvorrichtung angeordnet sein. Obwohl die Erfindung hier an einem Feldhäcksler dargestellt wird, kann sie auch an Mähdreschern mit zugehörigen Erntevorsätzen, wie Schneidwerken oder Maispflückern, Verwendung finden. Im Folgenden beziehen sich Richtungsangaben, wie vor, hinter, seitlich und oberhalb auf die Vorwärtsrichtung der Erntemaschine 10 und des Erntevorsatzes 20, die in der Figur 1 nach links verläuft.

Zum Aufnehmen des Ernteguts dient der Erntevorsatz 20, der in Vorwärtsrichtung an der Frontseite der Erntemaschine 10 am Gehäuse des Einzugsförderers 30 befestigt ist. Der Erntevorsatz 20 ist in der der dargestellten Ausführungsform ein an sich bekanntes Maisgebiss, das einen Mittelteil 38 und zwei (bezüglich der Vorwärtsrichtung der Erntemaschine 10) seitlich links und rechts neben dem Mittelteil 38 angeordneten Seitenteile 40 umfasst. Die Seitenteile 40 sind zum Straßentransport nach oben schwenkbar am Mittelteil 38 befestigt und können zum Ernteeinsatz durch Hydraulikzylinder (nicht gezeigt) hydraulisch heruntergeschwenkt werden, so dass sie beim Erntebetrieb parallel zum Mittelteil 38 verlaufen. Anschließend können sie wieder hinauf geschwenkt werden. Die Zeichnung zeigt die Seitenteile 40 in hochgeschwenktem Zustand. Als Einzugseinrichtungen zum Einziehen von Pflanzen sind am Mittelteil 38 in der vorliegenden Ausführungsform vier Einzugs- und Mähtrommeln 32 angebracht, während an beiden Seitenteilen 40 jeweils zwei Einzugs- und Mähtrommeln 32 angebracht sind. Der Erntevorsatz 20 ist in an sich bekannter Weise mit Halmteilern 36, den Einzugs- und Mähtrommeln 32, Teilerspitzen 34, Abdeckplatten und Fördermitteln ausgestattet, um das geerntete Gut der Häckseltrommel der Erntemaschine 10 zuzuführen. Der Erntevorsatz 20 zieht im Betrieb die Stängel des Mähguts in aufrechter Stellung ein, schneidet sie ab und führt sie dem Einzugsförderer 30 und anschließend der Häckseltrommel der Erntemaschine 10 zu.

Der Erntevorsatz 20 umfasst einen Trägerrahmen, der einen unteren Querträger 42 und einen oberen Querträger 44 aufweist. Der untere Querträger 42 erstreckt sich unten an der Rückseite des Erntevorsatzes 20 und umfasst drei Segmente, von denen jeweils eines dem Mittelteil 38 und eines jedem Seitenteil 40 zugeordnet ist. An der Vorderseite des unteren Querträgers 42 sind Getriebegehäuse 46 angeschraubt, die zum Antrieb jeweils einer Einzugs- und Mähtrommel 32 dienen. Eine Antriebswelle 48 zum Antrieb der Einzugs- und Mähtrommeln 32 über in den Getriebegehäusen 46 angeordnete Getriebe, die auch zum Antrieb der weiteren Fördermittel des Erntevorsatzes 20 dient und von einer Abtriebswelle der Erntemaschine 10 angetrieben wird, erstreckt sich in seitlicher Richtung innerhalb des hohlen unteren Querträgers 42. Der obere Querträger 44 erstreckt sich in seitlicher Richtung oberhalb des Einlasses des Einzugsförderers 30 über dessen Breite. An der Oberseite des Einzugsförderers 30 sind hakenförmige Tragelemente vorgesehen, die den oberen Querträger 44 von vorn und hinten untergreifen und zur Befestigung des Erntevorsatzes 20 an der Erntemaschine 10 dienen.

In der Figuren 1 ist der Erntevorsatz 20 mit einem Hilfsfahrwerk 50 zur Abstützung des Erntevorsatzes 20 bei der Straßenfahrt gekoppelt. Das Hilfsfahrwerk 50 umfasst ein Gestell 52 und ein Stützrad 54, das um eine Drehachse 56 drehbar an einer Halterung 58 gelagert ist. Die Halterung 58 ist um eine horizontale, parallel zur Drehachse 56 orientierte Schwenkachse 60 schwenkbar an einem Stützelement 62 angebracht, das seinerseits um eine etwa vertikale Achse frei drehbar am Gestell 52 angelenkt ist. Zwischen dem Stützelement 62 und der Halterung 58 erstreckt sich ein Aktor 64 in Form eines Hydraulikzylinders, der an beiden Befestigungspunkten 66 um sich parallel zur Drehachse 56 und Schwenkachse 60 erstreckende Achsen schwenkbar angelenkt ist. Das Stützrad 54 könnte auch an beliebiger anderer Stelle des Hilfsfahrwerks 50 montiert sein, beispielsweise unterhalb des Erntevorsatzes 20.

Das Gestell 52 umfasst einen unteren Teil 68, dessen rückwärtiges Ende am unteren Querträger 42 verriegelbar ist, einen sich an der Vorderseite des unteren Teils 68 etwa vertikal nach oben erstreckenden, vertikalen Teil 70 und einen vorderen, etwa horizontalen Teil, der sich vom oberen Ende des vertikalen Teils 70 nach vorn erstreckt und an dem das Stützelement 62 angelenkt ist. Eine Strebe 74 verbindet das obere Ende des vertikalen Teils 70 mit dem oberen Querträger 44. Das Stützrad 54 ist somit durch das Stützelement 62 nachlaufgelenkt am Gestell 52 befestigt und nimmt einen Teil der Last des Erntevorsatzes 20 (oder dessen gesamte Last und ggf. einen Teil der Last der Erntemaschine 10) auf. Die Stützkraft des Stützrades 54 wird durch den Aktor 64 definiert.

In der Figur 1 sind die Erntemaschine 10, der Erntevorsatz 20 und das Hilfsfahrwerk 50 in einer Straßenfahrtposition dargestellt. Vor Beginn des Erntebetriebs kann das Hilfsfahrwerk 50 vom Erntevorsatz getrennt werden, indem die Verriegelungen zwischen dem unteren Teil 68 und dem unteren Querträger 42 und zwischen der Strebe 74 und dem oberen Querträger 44 gelöst werden. Anschließend können die Seitenteile 40 des Erntevorsatzes 20 nach unten verschwenkt werden. Vor einer weiteren Straßenfahrt werden die Seitenteile 40 wieder hochgeschwenkt und das Hilfsfahrwerk 50 an den Querträgern 42, 44 verriegelt.

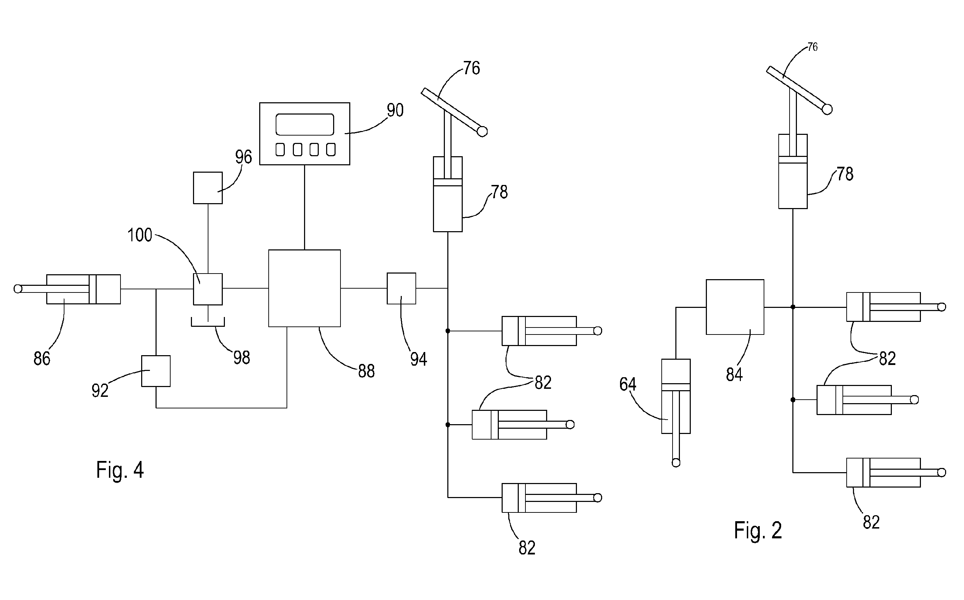

Die Figur 2 zeigt ein Schema der Bremshydraulik der Erntemaschine 10 der Figur 1. Ein Bremspedal 78 bewegt den Kolben eines Geberzylinders 80, dessen Kolbenraum hydraulisch mit Bremszylindern 82 verbunden ist, die wiederum Bremsen der vorderen Räder 14 und des Stützrades 54 betätigen. Weitere Bremszylinder (nicht gezeigt) können den hinteren Rädern 16 zugeordnet sein. Ein mit dem Aktor 64 hydraulisch verbundenes Ventil 84 wird durch den Druck des Geberzylinders 80 gesteuert, und zwar in der Weise, dass ein vorbestimmter Druck im Aktor 64 aufrecht erhalten wird, wenn keine Bremsung erfolgt, und der Druck im Aktor 64 demgegenüber ansteigt, wenn eine Bremsung der Erntemaschine 10 über das Bremspedal 78 vorgenommen wird. Dadurch wird die Stützkraft des Stützrades 54 beim Bremsen proportional zur Bremskraft vergrößert, was der beim Bremsen auftretenden Verlagerung des Schwerpunkts der Erntemaschine 10 nach vorn entgegen wirkt und eine hinreichende Belastung und Bremswirkung der vorderen Räder 14 bewirkt.

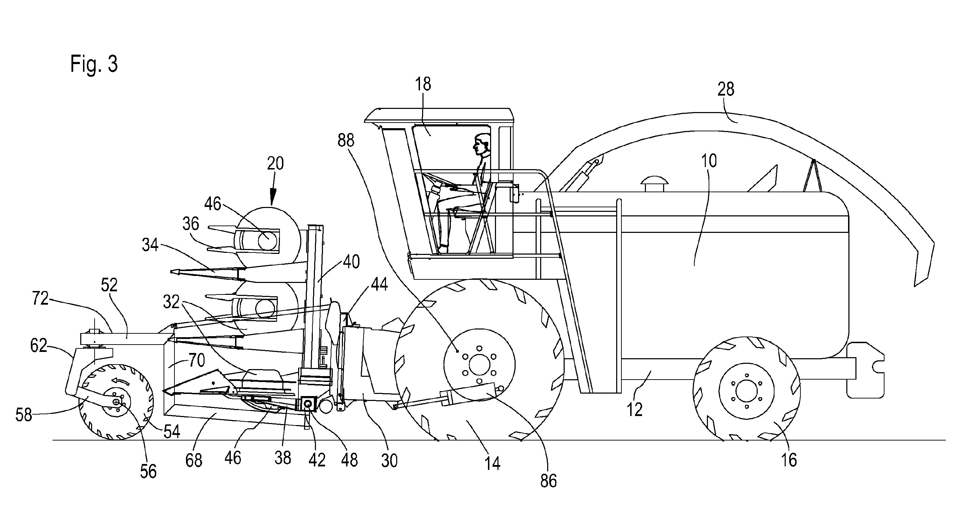

Bei der Ausführungsform nach Figur 3 sind mit der Ausführungsform nach Figur 1 übereinstimmende Elemente mit denselben Bezugszeichen gekennzeichnet. Die wesentlichen Unterschiede bestehen darin, dass die Halterung 58 starr mit dem Stützelement 62 verbunden oder einteilig damit hergestellt ist. Außerdem ist der Einzugsförderer 30 um die horizontal und quer zur Vorwärtsrichtung verlaufende Drehachse 88 der (nicht gezeigten) Häckseltrommel schwenkbar am Fahrgestell 12 angelenkt, wobei eine Verstellung des Einzugsförderers 30 um die Drehachse 88 durch einen Aktor 86 in Form eines Hydraulikzylinders erfolgt. Im Konkreten sind in der Regel zwei Aktoren 86 an beiden Seiten des Einzugsförderers 30 angebracht.

Die Figur 4 stellt ein Schema der Bremshydraulik und der Höhensteuerung des Erntevorsatzes 20 der Erntemaschine aus Figur 3 dar. Während die Bremshydraulik mit der Ausführungsform der Figur 2 übereinstimmt, umfasst die Höhensteuerung des Erntevorsatzes 20 eine Steueranordnung mit einer Steuerung 88, die mit einer Bedienereingabeeinrichtung 90, einem ersten Drucksensor 92, einem zweiten Drucksensor 94 und einem elektromagnetischen Ventil 100 verbunden ist. Das Ventil 100 ist mit dem Aktor 86, einer Pumpe 96 und einem Vorratsbehälter 92 verbunden. Der erste Drucksensor 92 beaufschlagt die Steuerung 88 mit Informationen hinsichtlich des Drucks im Kolbenraum des Aktors 86. Der zweite Drucksensor 94 beaufschlagt die Steuerung 88 mit Informationen hinsichtlich des Bremsdrucks. Während des Straßenfahrbetriebs steuert die Steuerung 88 das Ventil 100 derart an, dass im Aktor 86 ein vorbestimmter Druck herrscht, der einer gewünschten Stützkraft des Stützrades 54 entspricht. Dieser Druck wird anhand des Signals des ersten Drucksensors 92 auf den Sollwert geregelt. Der Sollwert kann mittels der Bedienereingabeeinrichtung 90 eingegeben werden. Falls nun das Signal des zweiten Drucksensors 94 darauf hinweist, dass eine Bremsung vorgenommen wird, vermindert die Steuerung 88 den Druck im Aktor 86, um die Belastung des Stützrads 54 zu vergrößern, vorzugsweise proportional zum Bremsdruck. Dadurch wird auch bei dieser Ausführungsform die Stützkraft des Stützrades 54 beim Bremsen vergrößert, was der beim Bremsen auftretenden Verlagerung des Schwerpunkts der Erntemaschine 10 nach vorn entgegen wirkt und eine hinreichende Belastung und Bremswirkung der vorderen Räder 14 bewirkt.

Es ist noch anzumerken, dass die Vortriebsgeschwindigkeit der Erntemaschine 10 üblicherweise durch einen Fahrhebel vorgegeben wird. Auch der Fahrhebel kann mit der Steuerung 88 verbunden werden und letztere die Stützkraft des Stützrads 54 bei einer durch eine Verstellung des Fahrhebels bewirkten Verzögerung der Erntemaschine 10 selbsttätig anheben. Da eine Anhebung der Stützkraft des Stützrads 54 nur bei ungünstigen Untergrundverhältnissen erforderlich sein kann, wäre es denkbar, den Schlupf der vorderen Räder 14 durch geeignete Sensoren zu erfassen (vgl. EP 1 674 306 A2) und nur dann eine Erhöhung der Stützkraft des Stützrads 54 vorzunehmen, wenn das Signal des zweiten Drucksensors 94 darauf hinweist, dass eine Bremsung vorgenommen wird und gleichzeitig die Sensoren schlupfende vordere Räder 14 erfassen. Weiterhin sei angemerkt, dass auch bei der Ausführungsform nach den Figuren 1 und 2 eine Höhensteuerung des Erntevorsatzes 20 gemäß den Figuren 3 und 4 vorgesehen sein kann. Der zweite Drucksensor 94 kann dort entfallen. Schließlich könnte die Höhensteuerung der Figur 4 auch den Aktor 64 der Ausführungsform nach Figur 1 ansteuern.

## Patentansprüche

1. Selbstfahrende Erntemaschine (10) mit einem durch vordere und hintere Räder (14, 16) und/ oder Raupenlaufwerke auf dem Boden abgestützten Fahrgestell (12), einem Einzugsförderer (30), an dem ein Erntevorsatz (20) angebracht ist, und wenigstens einem den vorderen Rädern (14) oder Raupenlaufwerken vorgelagerten, in Bodeneingriff verbringbaren Stützrad (54), dessen Stützlast durch einen Aktor (64, 86) verstellbar ist, **dadurch gekennzeichnet, dass** der Aktor (64, 86) bei einer Bremsung der Erntemaschine (10) im Sinne einer Vergrößerung der Stützkraft des Stützrades (54) ansteuerbar ist.

2. Erntemaschine (10) nach Anspruch 1, **dadurch gekennzeichnet, dass** das Stützrad (54) am Erntevorsatz (20) und/oder am Einzugsförderer (30) und/oder an der Erntemaschine (10) befestigt ist.

3. Erntemaschine (10) nach Anspruch 2, **dadurch gekennzeichnet, dass** das Stützrad (54) an einem Hilfsfahrwerk (50) befestigt ist, das bei einer Straßenfahrt am Erntevorsatz (20) befestigbar und beim Erntebetrieb davon abnehmbar ist.

4. Erntemaschine (10) nach Anspruch 3, **dadurch gekennzeichnet, dass** der Aktor (64) zwischen dem Hilfsfahrwerk (50) und einer gegenüber dem Hilfsfahrwerk (50) bewegbaren Halterung (58) des Stützrads (54) angeordnet ist.

5. Erntemaschine (10) nach Anspruch 4, **dadurch gekennzeichnet, dass** die vorderen Räder (14) und/oder Raupenlaufwerke der Erntemaschine (10) durch hydraulisch betätigte Bremsen bremsbar sind, und dass der Aktor (64) durch ein über den Druck der Bremsen gesteuertes Ventil (84) kontrolliert wird.

6. Erntemaschine (10) nach einem der Ansprüche 1 bis 3, **dadurch gekennzeichnet, dass** der Aktor (86) zur Höhenverstellung des Einzugsförderers (30) gegenüber dem Fahrgestell (12) der Erntemaschine (10) angeordnet ist.

7. Erntemaschine (10) nach einem der Ansprüche 1 bis 6, **dadurch gekennzeichnet, dass** der Aktor (86) durch eine Steueranordnung zur Höhensteuerung des Einzugsförderers (30) kontrollierbar ist, und dass der Steueranordnung ein Bremssignal zuführbar ist.

8. Erntemaschine (10) nach einem der vorhergehenden Ansprüche, **dadurch gekennzeichnet, dass** dem Stützrad (54) eine mit dem Bremssystem der Erntemaschine (10) gekoppelte Bremse zugeordnet ist.

9. Erntemaschine (10) nach einem der vorhergehenden Ansprüche, **dadurch gekennzeichnet, dass** die Stützkraft des Stützrads (54) proportional zur Bremskraft angehoben wird.

10. Erntemaschine (10) nach einem der vorhergehenden Ansprüche, **dadurch gekennzeichnet, dass** das Stützrad (54) permanent oder nur bei einer Bremsung der Erntemaschine (10) in Bodeneingriff gelangt.
